Europäisches Patentamt

European Patent Office

Office européen des brevets

(11) Publication number:　**0 222 919**
**A1**

⑫　　　　　　　　　　**EUROPEAN　PATENT　APPLICATION**

published in accordance with Art. 158(3) EPC

㉑　Application number: **86902909.0**

㉒　Date of filing: **08.05.86**

Data of the international appli-
cation taken as a basis:

㊦　International application number:
**PCT/JP 86/00237**

㊧　International publication number:
**WO 86/06911 (20.11.86 86/25)**

㊿　Int. Cl.⁴: **H 04 N 7/173, H 04 M 11/06**

㉚　Priority: **08.05.85 JP 96074/85**

⑦⑪　Applicant: **KABUSHIKIKAISHA AI ESU ESU, 21-12,
Yoyogi 1-chome, Shibuya-ku Tokyo 151 (JP)**

㊤　Date of publication of application: **27.05.87
Bulletin 87/22**

⑫　Inventor: **SATO, Nobuyuki, 3-45, Chihaya-cho,
Toshima-ku Tokyo 171 (JP)**

㉔　Representative: **Fleuchaus, Leo, Dipl.-Ing. et al,
Melchiorstrasse 42, D-8000 München 71 (DE)**

㊳　Designated Contracting States: **CH DE FR GB IT LI NL**

㊹　**METHOD AND APPARATUS FOR DISPLAYING CHARACTER AND GRAPHIC DATA SIMULTANEOUSLY WITH VIDEO DATA
ON SINGLE DISPLAY ON TERMINAL SIDE IN COMMUNICATIONS SYSTEM.**

㊐　In a videotex communications system, a method and an
apparatus for displaying animation data (video image) inter-
locked to particular picture data simultaneously with
character and graphic data on a single display, by inserting
a particular code into the picture data to obtain a particular
picture when it is to be stored in a memory of a main
computer in the communications system, and by controlling
the video devices on the user's terminal side via a videotex
network.

0222919

SPECIFICATION

## Title of the Invention

METHOD AND SYSTEM FOR THE DISPLAY OF LITERAL/PATTERN IMAGE IN A
VOLUNTARY COMBINATION WITH A VIDEO IMAGE

## Field of the Invention

The present invention relates to a method and system for displaying
literal and/or pattern manifestations (literal/pattern images) in a
voluntary combination with a static and/or dynamic pictorial image (video
image) on a display means in a terminal device of a data transmission
system, such as, videotex network or the like, having a host computer, a
transmission controller circuit and transmission terminal devices, under
the use of conventional telephone cable as the transmission path and
under a voluntary selection of the display combination from the terminal
device.

## Background of the Invention

In the conventional videotex systems, such as, CAPTAIN (Character
And Pattern Telephone Access Information Network) in Japan, NAPLPS (North
American Presentation Level Protocol Syntax) in North America and CEPT
(Comittee Europian Des Posteset) in europe, combination display of an
image information with literal information is limited only to the use of
combined images prepared preliminarily by a computer, such as those of
computer graphics etc.

The CAPTAIN system for videotex network had been developed in Japan
and has been applied in a commercial base since September of 1984 by NTT.
However, the progressively increasing requests for every voluntary
combination display in recent years have rendered the CAPTAIN system now
insufficient to cover all of them.

Especially, for example, informations of highly sentimental image,

1

such as, sceneries on tour course, fashion exhibitions, cookery displays etc., have been brought to display only with poor representation effect. Despite of that they speak of the age of new media, the present state of Japan is barely in such a stage that only a single demonstrative model area of Mitaka, Tokyo has installed the so-called INS (Information Network System) using laid down optical fiber transmission cable and nowhere else has been found such an information sytem and, thus, it is not possible to provide screen images by VRS (Video Response System) to domestic houses and business offices.

Due to the prompt development in the communication technique, it has become more and more difficult to respond rapidly to the increasing needs of a sosiety with information network, under the use of telephone cables. Thus, there had been a growing demand for a measure of, such as, communication with a transmission satellite etc., whereby it has been requested to replace the conventional telephone cables by optical fiber cables. However, vast expenditures in the cost and time should be paid for it and even an assumption that more than 10 years may be required therefor is currently accepted.

Under these circumstances, it would have been quite advantageous, when a method and system for displaying literal/pattern images in a voluntary combination with a video image on a single display means in a terminal device of a data transmission system under a voluntary access to the memories storing such informations from the terminal device should be developed without using otical fiber cable.

Disclosure of the Invention

The present invention relates to a method and system for displaying various literal/pattern images in superposition with a static/dynamic video image on a display means of a terminal device in various data

2

transmission systems, such as, videotex network and so on, having a host computer, in the memory unit of which are stored various information blocks for static/dynamic video images and for character/pattern manifestations, labelled each with an identification sign; a transmission path consisting of a conventional telephone cable; a transmission controller circuit and transmission terminal devices, under a voluntary selection of the display combination from the terminal device, comprising, storing the information blocks in the memory unit of the host computer of the transmission system with an identification label affixed to each information block, reading out either one of said information blocks for the video image in a voluntary combination with the information block(s) for said literal/pattern images from said memory of the host computer by means of a computer unit, and reproducing each requisite video image and the requisite literal/pattern images in a voluntary combination on the display means so as to permit a display of the selected video image in a voluntary combination with the requisite literal/pattern manifestations under superposition of them.

Upon the input operation for the image and character/pattern informations, the ionformations are stored in a memory unit of the host computer of information center of the data transmission system under labelling by a special identification sign or cipher combined or inserted into each information block. From the so stored information blocks, each requisite block for the literal/pattern manifestation is read out and, at the same time, the information block to be superposed thereon is taken out and is given on a suitable position of the display screen under superposition on the literal/pattern image using a computer disposed in the terminal device of the system. The information blocks for display prepared in the image processing input unit are stored in the image data file of the main computer of the information center. Upon reading out the information block through the videotex network by putting up key pad in the terminal device, the computer in the terminal device will read the identification cipher.

Therefore, the method is in particular applicable for the case where the display demonstration by the videotex network is insufficient by the conventional literal/pattern demonstration only, such as those in the fields of education, fashion design, cookery, canvassing for tour and so on. By the method according to the present invention, it becomes possible to realize an attractive demonstration by a video disc image combined with voluntarily suitable literal messages and visual pattern accessories, what was impossible by the conventional system. Thus, the convincing power to the user is multiplicated.

Brief Description of the Drawings appended

Fig. 1 is a schematic diagram explaining the CAPTAIN (Character And Pattern Telephone Access Information Network) system, including a videotex communication network, an information center and terminal units as indicated.

Figs. 2-1 and 2-3 illustrate an example of a videotex information image reproduced on the display screen in the terminal device, which includes a literal indication to be used as the identification cipher.

Figs. 2-2, 2-4 and 4 represent different examples of display by the method according to the present invention, in which a display image includes in superposition thereon a moving video picture at the lower part of the image screen.

Fig. 3 demonstrates an example of a format for a VTR image.

Fig. 5 is a schematic diagram explaining a typical users' terminal device of conventional system.

4

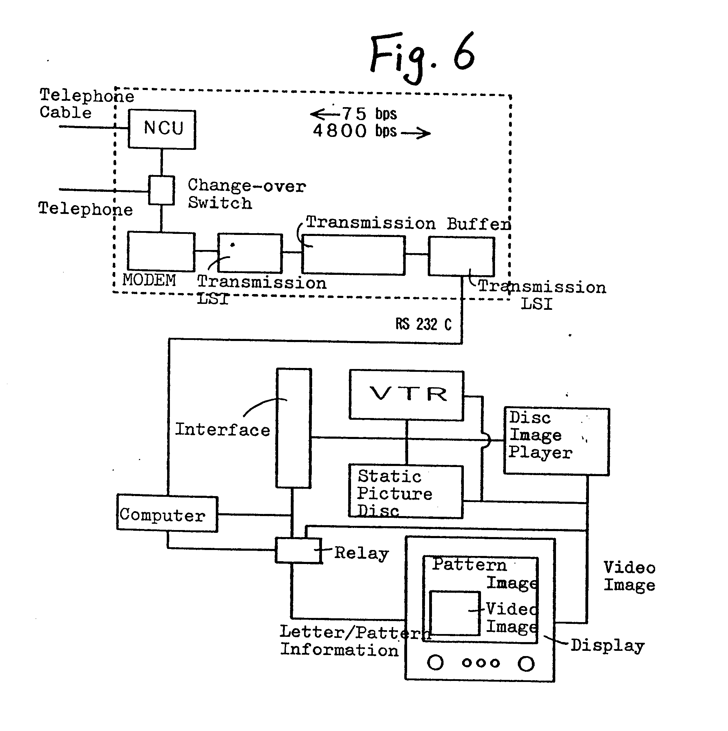

Fig. 6 is a block diagram showing the system according to the present invention in which the terminal device includs a computer and other units according to the present invention.

Description of Preferred Embodiment

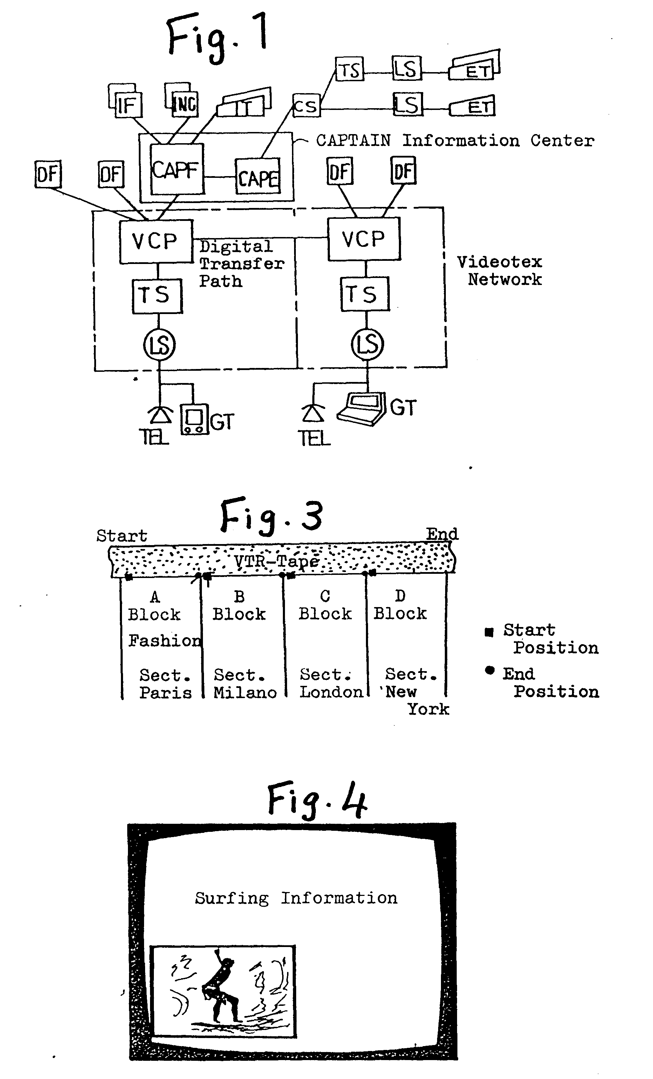

The CAPTAIN videotex system, to which the present invention is to be applied, is explained in Fig. 1 by a schematic block diagram, in which the symbols represent each as follows:

DF   : Direct Information Center

TS   : Tool Switching (trunk line switch-board)

LS   : Local Switching (subscriber's line switch-board)

GT   : Graphic Terminal (terminal device of videotex)

TEL  : Telephone

CS   : Center Switching (center junction switch-board)

CAPF : Captain Information Processing Unit

CAPE : Captain

VCP  : Videotex Communication Terminal

IT   : Information Input Terminal

ET   : Editing Terminal (simple editing information input terminal)

INC  : Information Input Center

IF   : Indirect Information Center

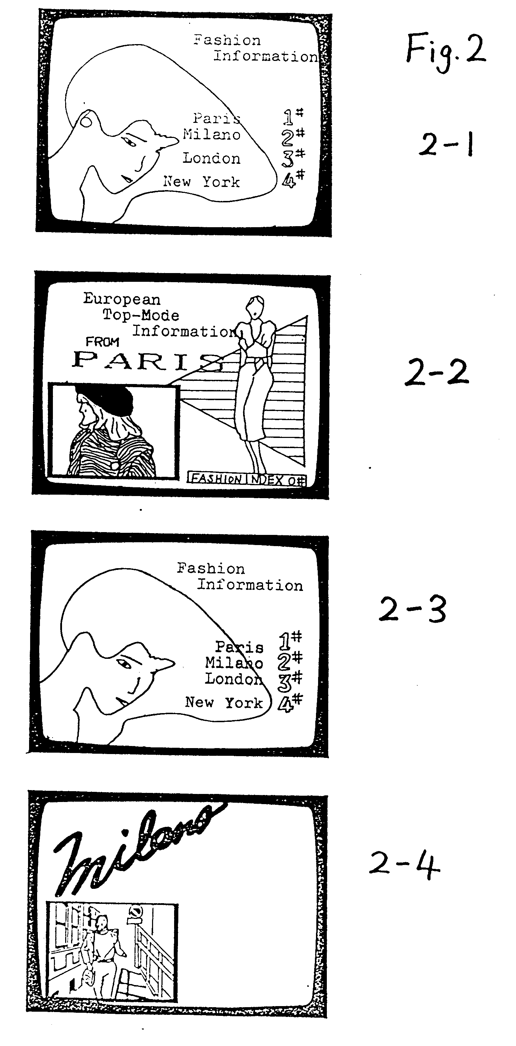

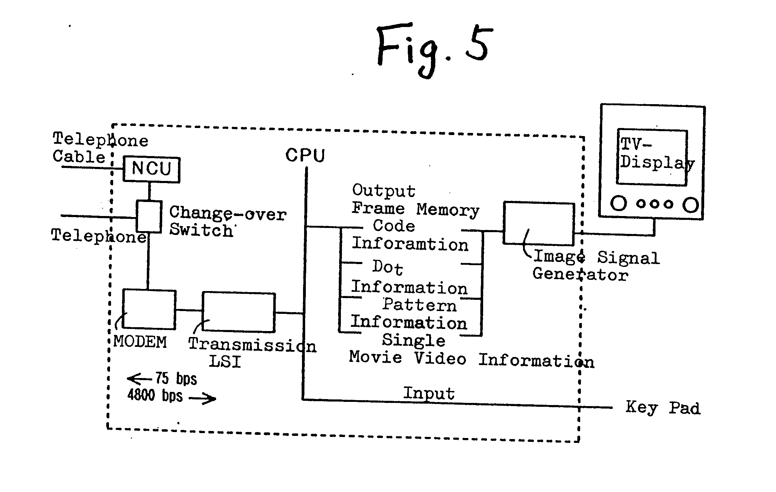

On calling an intended information picture onto the display screen by a terminal device of the system according to the present invention, as shown in Fig. 2-1, the A-block of VTR-tape for Paris section of a fashion information starts by means of the identification cipher, as indicated in the image format of Fig. 3. The ciphers 1*, 2*, 3* and 4* in Fig. 2-1 correspond to sections Paris, Milano, London and Newyork of fashion information respectively.

When a key for 1* is actuated on the keyboard of user's terminal

5

device, a corresponding block of image informations stored in the memory unit of the main computer is read out and, by the action of the computer arranged in the terminal device in combination with the interface, a VTR-unit, an image disc player and so on, a corresponding selection of the video image information of video movie is attained. In this manner a voluntary combination of the video image with the literal/pattern image on the terminal display means is realized, as exemplified in Fig. 2-2. Upon termination of the play of VTR-tape at the end of A-block, the VTR-unit is put off and the display image on the screen turns back to the original literal/pattern image shown in Fig. 2-3.

The second example shown in Fig. 2-4 is realized by selecting the key for 2* to start B-block of VTR-tape in Fig. 3 in the same manner as above.

Another example is shown in Fig. 4.

The control of video disc reproducing unit including other external image recording installations is realized also by the computer and the interface arranged in the user's terminal device.

For the display means to be employed in the method according to the present invention, there may be enumerated, for example, a digital TV display, a display means having an analog to digital conversion board in RGBTV, a display means having a digital to analog conversion board in analog TV, a display means permitting superposition of analog and digital performances, a display means permitting display on different broadcast standards, such as, NTSC/PAL etc., and so on.

Field of Application in the Industry

The method and system according to the present invention permit a more extended possibilities of image demonstration by a user's voluntary choice at each terminal device. For example, the invention is thus quite useful for overseas tour guide, for the introduction of artistic works in

6

fashion design, commercial articles, for demonstration of cookery procedures, for advertising many trading shops, for demonstration in education and so on.

0222919

What is claimed is:

1. A method for displaying various literal/pattern images in superposition on a static/dynamic video image on a display means of a terminal device in various data transmission systems, such as, videotex network and so on, having a host computer, in the memory unit of which are stored various information blocks for static/dynamic video images and for character/pattern images, labelled each with an identification sign; a transmission path consisting of a conventional telephone cable; a transmission controller circuit and transmission terminal devices, under a voluntary selection of the display combination from the terminal device, comprising, storing the information blocks in the memory unit of the host computer of the transmission system with an identification label affixed to each information block, reading out either one of said information blocks for the video image in a voluntary combination with the information block(s) for said literal/pattern images from said memory of the host computer by means of a computer unit, and reproducing each requisite video image and the requisite literal/pattern images in a voluntary combination on the display means so as to permit a display of the selected video image in a voluntary combination with the requisite literal/pattern manifestations under superposition of them.

2. A system for displaying various literal/pattern images in superposition on a static/dynamic video image on a display means of a terminal device in various data transmission systems, such as, videotex network and so on, having a host computer, in the memory unit of which are stored various information blocks for static/dynamic video images and for character/pattern images, labelled each with an identification sign; a transmission path consisting of a conventional telephone cable; a transmission controller circuit and transmission terminal devices, under a voluntary selection of the display combination from the terminal device, comprising, a computer arranged in the terminal device so as to hold a VTR-unit, image disc reproduction device and so on in combination with an interface, for effecting a voluntary choice of reproduction of the static/dynamic video image in superposition on voluntarily reproduced literal/pattern images by operating said terminal device computer.

0222919

# Fig. 1

CAPTAIN Information Center

VCP — Digital Transfer Path

Videotex Network

GT

TEL

# Fig. 3

Start — End

VTR-Tape

| A Block | B Block | C Block | D Block |
|---------|---------|---------|---------|

Fashion

Sect. Paris | Sect. Milano | Sect. London | Sect. New York

■ Start Position
● End Position

# Fig. 4

Surfing Information

0222919

Fig.2

2-1

2-2

2-3

2-4

# Fig. 5

Telephone
Cable

NCU

CPU

TV-
Display

○ ○○○ ○

Change-over
Switch

Telephone

Output
Frame Memory
— Code
Inforamtion
— Dot
Information
Pattern
Information
Single
Movie Video Information

Image Signal
Generator

MODEM

Transmission
LSI

← 75 bps
4800 bps →

Input

Key Pad

# Fig. 6

Telephone Cable

NCU

← 75 bps
4800 bps →

Change-over Switch

Telephone

Transmission Buffer

MODEM    Transmission LSI    Transmission LSI

RS 232 C

Interface

VTR

Disc Image Player

Static Picture Disc

Computer

Relay

Pattern Image

Video Image

Video Image

Display

Letter/Pattern Information

○  ○○○  ○

0222919

# INTERNATIONAL SEARCH REPORT

International Application No. PCT/JP86/00237

## I. CLASSIFICATION OF SUBJECT MATTER (if several classification symbols apply, indicate all) [3]

According to International Patent Classification (IPC) or to both National Classification and IPC

Int.Cl[4]    H04N7/173, H04M11/06

## II. FIELDS SEARCHED

### Minimum Documentation Searched [4]

| Classification System | Classification Symbols |
|---|---|
| IPC | H04N7/00, 7/16, 7/173 <br> H04M11/00, 11/06 |

### Documentation Searched other than Minimum Documentation
to the Extent that such Documents are Included in the Fields Searched [5]

| | |
|---|---|
| Jitsuyo Shinan Koho | 1949 – 1985 |
| Kokai Jitsuyo Shinan Koho | 1972 – 1985 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| A | JP, B2, 56-32823 (Nippon Telegraph & Telephone Kabushiki Kaisha) 30 July 1981 (30. 07. 81) (Family: none) | 1 – 2 |
| A | JP, A, 58-85689 (Nippon Gakki Seizo Kabushiki Kaisha) 23 May 1983 (23. 05. 83) (Family: none) | 1 – 2 |
| A | JP, A, 57-84685 (Fuji Facom Seigyo Kabushiki Kaisha) 27 May 1982 (27. 05. 82) (Family: none) | 1 – 2 |

\* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search : | Date of Mailing of this International Search Report [2] |
|---|---|
| August 1, 1986 (01. 08. 86) | August 18, 1986 (18. 08. 86) |
| International Searching Authority [1] | Signature of Authorized Officer [20] |
| Japanese Patent Office | |

Form PCT/ISA/210 (second sheet) (October 1981)